(19) Europäisches Patentamt

European Patent Office

Office européen des brevets

(11) EP 1 170 531 A2

(12) EUROPEAN PATENT APPLICATION

(43) Date of publication:
09.01.2002 Bulletin 2002/02

(51) Int Cl.7: F16H 61/00

(21) Application number: 01305365.7

(22) Date of filing: 20.06.2001

(84) Designated Contracting States:
AT BE CH CY DE DK ES FI FR GB GR IE IT LI LU MC NL PT SE TR
Designated Extension States:
AL LT LV MK RO SI

(30) Priority: 30.06.2000 GB 0016181

(71) Applicant: Lucas Industries Limited
West Midlands B90 4LA (GB)

(72) Inventors:
• Pfleger, Dominique Lucienne
  Hemel Hempstead, Hertfordshire HP3 9NJ (GB)
• Hearn, Stephen Mark
  Cheshunt, Hertfordshire EN7 6NR (GB)

(74) Representative: Beck, Simon Antony et al
Withers & Rogers, Goldings House, 2 Hays Lane
London SE1 2HW (GB)

(54) **Belt clamp force controller**

(57) A belt clamp force regulator is provided for controlling the clamp force exerted on a drive belt in a continuously variable transmission. The regulator seeks to maintain a clamp force greater than that required to transmit the mechanical load consistent with the output of the generator. This ensures that the belt will not slip. However, the controller reduces belt clamp when it can so as to obtain a good in service lifetime for the belt.

Fig.3.

**Description**

The present invention relates to a belt clamp force controller and in particular a controller for use within a continuously variable transmission belt drive unit for driving a generator within a aircraft power generation system.

It has been proposed in GB 2220038 that a continuously variable belt drive transmission may be used to drive a constant speed generator from one of the output spools of a gas turbine engine.

According to a first aspect of the present invention, there is provided a belt clamp force regulator for controlling the clamp force exerted on a drive belt in a continuously variable transmission input stage for a generator, the regulator comprising a clamp force controller having an input for receiving data representative of the amount of power being produced by the generator and for calculating a target clamp force as a function of the amount of power being produced, said clamp force having a predetermined minimum value.

It is thus possible to provide a controller which enables the clamp pressure and hence the clamp force acting on the belt to be reduced to a minimum value consistent with ensuring slippage between the belt and the pulleys of the continuously variable transmission system does not arise. Control of the clamp force on the belt has a significant effect on the working life of the transmission. It has been estimated that belt wear and fatigue increases exponentially with increasing clamp force on the belt. Thus it is clearly desirable to reduce the clamp force to a minimum value consistent with transmitting power from the prime mover to the generator. However, slippage between the belt and the pulleys results in scoring of the pulleys, wear on the belt, and rapidly results in degradation or failure of the transmission.

Preferably the clamp force exerted on the belt has a minimum value. This value may be selected to ensure that sudden load changes, or first load application, will not result in the belt starting to slip. Thus the provision of a minimum value acts as a safety margin against slippage occurring.

Preferably the clamp force applied to the transmission belt of the generator is substantially proportional to the power being supplied at the output of the generator. The value of proportionality may be selected to provide a further safety margin. The transition from a constant force to a proportional force may occur at a point related to the relevant system requirements. Preferably the clamp force is set such that the generator is rated to provide an output in excess of and proportional to its current (i.e. present) output without slippage being expected to occur. The constant of proportionality may be increased to two, or more so as to allow for the possibility where generators are arranged to operate in a pair, and failure of one generator would result in its load being immediately transferred to the remaining functioning generator.

Preferably the clamp force increases in a continuous manner within increasing load. The clamp force may become constant at forces equivalent to power demands in excess of the physical capability of the generator to supply these demands, even when operated in an overrated mode even for short durations.

Preferably the controller exhibits hysteresis or an acceptance window in order to prevent "hunting" of the controller about its target value.

The controller may implement the transfer function as an analogue controller. Alternatively, the compressive force may be scheduled as a function of load within a digital controller.

According to a second aspect of the present invention, there is provided a method of controlling the clamp force exerted on a drive belt in a continuously variable transmission input stage for a generator, the method comprising the steps of obtaining data representative of the amount of power being produced by the generator, and calculating a target clamp force as a function of the amount of power being provided by the generator, said force having a minimum value.

According to a third aspect of the present invention, there is provided a generator for use in an aircraft power generation system having a continuously variable belt driven transmission associated with a generator such that the generator rotates at a constant rate throughout a predetermined operating range of a prime mover, the generator controller comprising means for estimating the amount of power being produced by the generator and for calculating a target clamp force to be exerted on the drive belt as a function of the amount of power being produced by the generator, said force having a minimum value.

The present invention will further be described, by way of example, with reference to the accompanying drawings, in which:

Figure 1 schematically represents a generator and continuously variable transmission for use within an aircraft power generation system;

Figure 2 schematically illustrates the pressure control system for the generator; and

Figure 3 illustrates a transfer function implemented within the pressure controller.

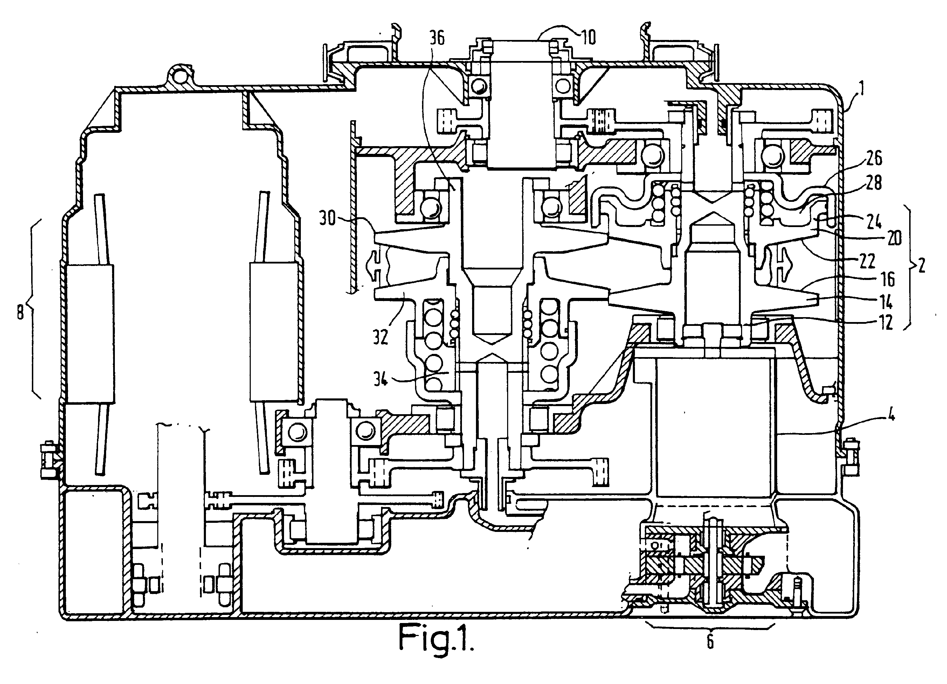

The generator shown in Figure 1 comprises a housing 1 which encloses a continuously variable transmission generally designated 2 and utilising a drive belt, a low pressure pump 4, a high pressure pump 6, a generator, generally designated 8, and an oil system disposed throughout the housing 1.

The belt drive 2 enables the variable speed of an input shaft 10 which receives a drive from a spool of a gas turbine engine to be converted to a near constant speed such that the generator 8 can be run at a near constant speed. In order to do this, a first shaft 12 of the belt drive mechanism carries a flange 14 which defines an inclined surface 16 against which a drive belt bears. The shaft 12 also carries a coaxially disposed movable flange 20 drivingly connected to the shaft 12 via a splined portion (not shown). The movable flange 20 defines a further inclined surface 22 facing towards the surface 16, which surfaces serve to define a V-shaped channel whose width can be varied by changing the axial position of the flange 20 with respect to the fixed flange 14. The flange 20 has a circularly symmetric wall 24 extending towards and co-operating with a generally cup shaped element 26 carried on the shaft 12 to define a first hydraulic control chamber 28 therebetween which is in fluid flow communication via a control duct (not shown) with an associated control valve. Similarly, a fixed flange 30 and a movable flange 32 are associated with a second shaft 36 and serve to define a pulley operated by a second hydraulic control chamber 34. A steel segmented belt having a cross-section in the form of a trapezium, with the outer most surface being wider than the inner most surface is used to interconnect the first and second variable ratio pulleys formed between the pairs of fixed and movable flanges, respectively, in order to drivingly connect the pulleys.

The position of each movable flange with respect to the associated fixed flange is controlled by the hydraulic control actuators. Since the interconnecting belt is of a fixed width, moving the flanges closer together forces the belt to take a path of increased radial distance. The interconnecting belt has a fixed length, and consequently as one movable flange is moved towards its associated fixed flange, the other movable flange must move away from its associated fixed flange in order to ensure that the path from an arbitrary starting point, around one of the pulleys, to the second pulley, around the second pulley and back to the fixed arbitrary starting point remains a constant distance.

It is important in such a pulley system that the position of the flanges can be well controlled. It is also important that the clamp force exerted upon the belt can be well controlled since belt wear and fatigue increases rapidly with clamp force but belt slippage is damaging to both the belt and the pulleys. Thus a controller or control system (not shown) is provided which controls both the generator frequency and the clamp force, exerted on the belt.

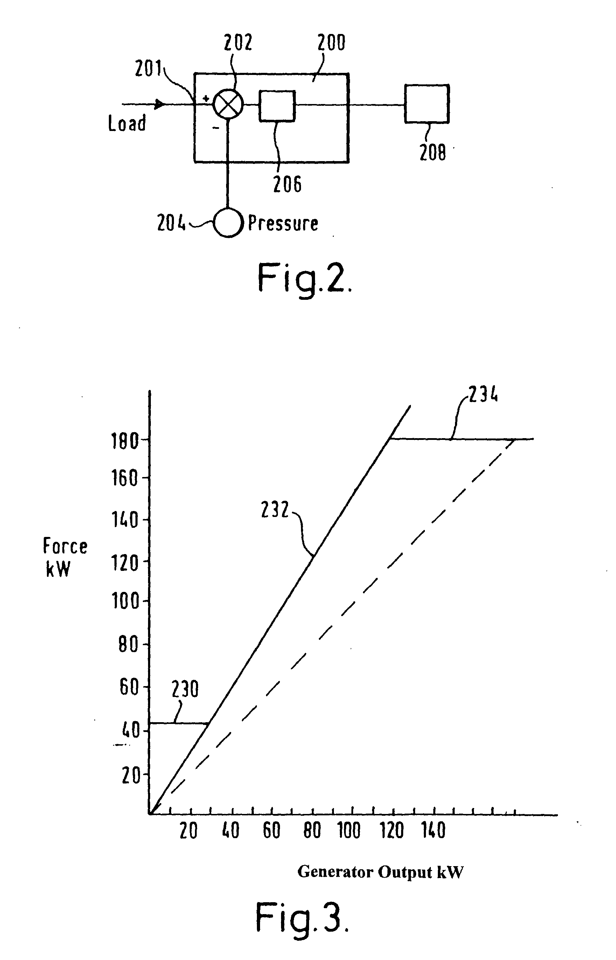

Figure 2 schematically shows a belt clamp force controller 200 constituting an embodiment of the present invention. The controller has a first input 201 for receiving a signal indicative of the amount of power being supplied by the generator, as well as the voltage and power factor. This signal may be derived from monitoring the current being produced by the generator. Current transformers for monitoring generator output current are frequently provided on generators. The generator load signal is applied to a non-inverting input of a summer 202. An output from one or more pressure transducers 204 is supplied to an inverting input of the summer 202. The pressure in the hydraulic control chamber 28 or 34 can be directly related to the clamp force being applied to the belt. Depending on the hydraulic configuration surrounding the control valves for each adjustable flange, it may be necessary to provide pressure transducers for each chamber, or at least each supply line feeding an associated chamber, or alternatively it may be possible to provide only one pressure transducer if a clamp force control valve is provided in a branch of the hydraulic circuit common to both variable pulley arrangements. It has been assumed that the latter configuration has been implemented in the hydraulic system for the controller shown in Figure 1.

Since the hydraulic pressure as measured by the pressure sensor 204 can be directly related to the expected load that the generator can supply before belt slippage occurs, then the pressure signal can be compared directly with the load signal provided that a suitable constant of proportionality has been introduced. An output of the summer 202 representing a difference between the demanded clamp force and actual clamp force is supplied to an input of a load scheduler 206. The load scheduler could be implemented as a classical analogue proportional-integral-derivative controller, but is more likely to be implemented as a digital controller as this allows the transfer function to be tailored to more complex functions than is easily obtained using analogue controllers. An output of the controller 206 is then provided to an electrically operated valve 208 for regulating the pressure.

Figure 3 shows an example transfer function as implemented within the controller 206. The abscissa represents the electrical output from the generator expressed in kilowatts. The ordinate represents the clamp force being applied to the belt. However, since the clamp force applied to the belt can be directly related to the load supplied from the generator that would cause the belt to slip, the ordinate has been represented as an equivalent electrical load represented in kilowatts as this is the required drive system power (or KVA at the appropriate power factor) rather than a clamp force acting on the belt as represented in Newtons. This representation allows the function of the controller to be more easily explained. As the load on the drive system is related to the true power, all values of load have been considered to the point of representing their true power value.

The clamp force as implemented in this example comprises a transfer function having distinct first, second and third regions. The first region, as represented by the line 230, relates to the performance of the clamping device when the generator is under low electrical loading, and typically providing an output in the range of 0 to 30 kW. Under these conditions, the clamp force remains constant at a value equivalent to 45 kW of load. Once the demand on the generator exceeds 30 kW, the transfer function moves into a second region 232 where the clamp force, as represented by a kW equivalent, is given by:

$$force_{kw}=1.5 \times demand_{kw}$$

Thus the clamp force is linearly proportional to the electrical load supplied by the generator and includes a safety margin of 50%. In this example, this second portion of the transfer function is maintained for loads in the range of 30 to 120 kW. For electrical loads in excess of 120 kW, the clamp force is maintained at a constant 180 kW equivalent, as represented by the third region 234.

In this example, the generator is rated for maximum output at 75 or 90 KVA, 0.75 to 1 power factor. However, it is common for such devices to be able to withstand short term or emergency overrunning, and under such circumstances the generator can supply loads in the region of 150 kW for several seconds.

It should be noted that other simple transfer functions may also be utilised. Thus the clamp force could, for example, be calculated as being equal to the demand load plus a constant offset, for example 45 kW.

As a further alternative the safety margin by which the clamp force exceeds the actual demanded load may reduce within increasing demanded load since the capability for load increases to be supplied by the generator diminishes as the electrical power supplied by the generator increases.

It is thus possible to provide a load controller wherein the clamp force acting on the belt is varied as a function of generator load in order to increase belt life whilst eliminating risk of slippage.

**Claims**

1. A belt clamp force regulator for controlling a clamp force exerted on a drive belt in a continuously variable transmission (2) input stage for a generator (8), the belt clamp force regulator comprising a clamp force controller (200) having an input (201) for receiving data representative of the amount of power being produced by the generator and for calculating a target clamp force as a function of the amount of power being produced, said target clamp force having a predetermined minimum value.

2. A belt clamp force regulator as claimed in claim 1 wherein, in use, the regulator seeks to minimise the clamp force consistent with ensuring that slippage between the belt and pulleys of the continuously variable transmission (2) does not occur.

3. A belt clamp force regulator as claimed in claim 1 or 2, in which the target clamp force is selected such that the clamp force exerted on the belt has a minimum value.

4. A belt clamp force regulator as claimed in claim 3, in which the minimum clamp force is selected such that sudden load changes will not cause the belt to slip with respect to the pulleys.

5. A belt clamp force regulator as claimed in any one of the preceding claims, in which the clamp force applied to the belt is substantially proportional, subject to a minimum force being allowed, to the power being supplied by the generator (8).

6. A belt clamp force regulator as claimed in claim 5, in which the transition between a constant clamp force to a variable force occurs at a point relevant to system requirements.

7. A belt clamp force regulator as claimed in any one of the preceding claims, in which the clamp force on the belt is set such that the generator (8) is rated to provide an output in excess of and proportional to its present output without slippage being expected to occur.

8. A belt clamp force regulator as claimed in any one of the preceding claims, in which the clamp force becomes constant for power outputs in excess of a predetermined value.

9. A belt clamp force regulator as claimed in any one of the preceding claims, in which the clamp force exerted on the belt is constant below a first generator output value and increases linearly above the first generator output value.

10. A method of controlling the clamp force exerted on a drive belt in a continuously variable transmission (2) input stage for a generator (8), the method comprising the steps of obtaining data representative of the amount of power being produced by the generator, and calculating a target clamp force as a function of the amount of power being provided by the generator, said force having a minimum value.

Fig.1.

201
202
200

+
⊗
206
208

−

204 ── Pressure

Load

# Fig.2.

Force
kW

180
160
140
120
100
80
60
40
20

234
232
230

20  40  60  80  100  120  140

Generator Output kW

# Fig.3.